# EUROPEAN PATENT APPLICATION

(11) **EP 4 550 876 A1**
(43) Date of publication of application: **07.05.2025**
(21) Application number: 23831947.9
(22) Date of filing: 30.06.2023
(51) Int. Cl.: H04W 28/02, G06N 3/098

(54) **CONGESTION CONTROL EVENT NOTIFICATION METHOD AND DEVICE IN WIRELESS COMMUNICATION SYSTEM**

(30) Priority: 01.07.2022 US 202263357650 P
(71) Applicant: LG Electronics Inc., Yeongdeungpo-gu Seoul 07336 (KR)
(72) Inventor: KIM, Laeyoung, Seoul 06772 (KR)
(74) Representative: Mooser, Sebastian Thomas
(86) International application number: PCT/KR2023/009228
(87) International publication number: WO 2024/005589

(57) **Abstract**

A method of operating a network function in a wireless communication system may comprise receiving a subscription request for a congestion control application related information event for at least one terminal, applying congestion control to the at least one terminal, and performing a notification of a congestion control application related information event based on the applied congestion control. The at least one terminal may be terminals selected based on a federated learning (FL) operation

## Description

### Technical Field

The following description relates to a wireless communication system and a congestion control event notification method. Specifically, it relates to a method of setting and notifying of an event based on non-access stratum (NAS) level congestion control in artificial intelligence/machine learning (AI/ML) based federated learning (FL) operation.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a congestion control event notification method and device in a wireless communication system

The present disclosure relates to a method and device for setting an NAS level congestion control based event by considering an AI/ML based FL operation in a wireless communication system.

The present disclosure relates to a method and device for preventing delay in learning iteration by a FL operation in a wireless communication system.

The present disclosure relates to a method and device for preventing skipping of training result reporting within a learning iteration by a FL operation in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a network function in a wireless communication system may comprise receiving a subscription request for a congestion control application related information event for at least one terminal, applying congestion control to the at least one terminal, and performing a notification of a congestion control application related information event based on the applied congestion control. The at least one terminal may be terminals selected based on a federated learning (FL) operation.

Also, as an example of the present disclosure, a network function operating in a wireless communication system may comprise at least one transceiver, at least one processor, and at least one memory operably connected to the at least one processor and configured to store instructions that, when executed, cause the at least one processor to perform a specific operation. The specific operation may control the at least one transceiver to receive a subscription request for a congestion control application related information event for at least one terminal, apply congestion control to the at least one terminal, and perform a notification of a congestion control application related information event based on the applied congestion control. The at least one terminal may be terminals selected based on a federated learning (FL) operation.

Also, as an example of the present disclosure, a method of operating a terminal in a wireless communication system may comprise transmitting a request message to a network function, receiving a response message including a backoff timer from the network function based on congestion control, and postponing an operation based on the backoff timer. The terminal may be a terminal selected for a FL operation, and the network function may apply the congestion control based on a congestion control application related information event and perform a notification of a congestion control application related information event.

Also, as an example of the present disclosure, a terminal operating in a wireless communication system may comprise at least one transceiver, at least one processor, and at least one memory operably connected to the at least one processor and configured to store instructions that, when executed, cause the at least one processor to perform a specific operation. The specific operation may control the transceiver to transmit a request message to a network function, control the transceiver to receive a response message including a backoff timer from the network function based on congestion control; and postpone an operation based on the backoff timer. The terminal may be a terminal selected for a FL operation, and the network function may apply the congestion control and performs a notification of a congestion control application related information event.

Also, as an example of the present disclosure, a device may comprise at least one memory and at least one processor functionally connected to the at least one memory. The at least one processor may control the device to receive a subscription request for a congestion control application related information event for at least one another device, apply congestion control to the at least one another device, and perform a notification of congestion control application related information event based on the applied congestion control. The at least one another device may be devices selected based on a FL operation.

Also, as an example of the present disclosure, a non-transitory computer-readable medium storing at least one instruction may comprise the at least one instruction executable by a processor. The at least one instruction may control a device to receive a subscription request for a congestion control application related information event for at least one another device, apply congestion control to the at least one another device, and perform a notification of a congestion control application related information event based on the applied congestion control. The at least one another device may be devices selected based on a FL operation.

In addition, the following may be applied commonly.

Also, as an example of the present disclosure, the network function may be an access and mobility management function (AMF), and the AMF may receive the subscription request for the congestion control application related information event from a network exposure function (NEF), the NEF may send the subscription request for the congestion control application related information event to the AMF based on an application function (AF) request.

Also, as an example of the present disclosure, based on the AMF applying the congestion control to the at least one terminal, the AMF may transmit a non-access stratum (NAS) message including a mobility management backoff timer value to the at least one terminal, and each of the at least one terminal may postpone an operation based on the mobility management backoff timer.

Also, as an example of the present disclosure, based on the notification of the congestion control application related information event being performed based on the applied congestion control, the AMF may send congestion control application related information to the NEF and the NEF may send the congestion control application related information to the AF.

Also, as an example of the present disclosure, the congestion control application related information may include at least one of information indicating that congestion control is applied to the at least one terminal, information indicating that the mobility management backoff timer value is provided to the at least one terminal, mobility management backoff timer information provided to the at least one terminal, information indicating that a reject message for an MM (mobility management) NAS message is transmitted to the at least one terminal, or congestion control level information.

Also, as an example of the present disclosure, the AF may select the at least one terminal for each learning iteration based on the FL operation, and the AF may provide FL model information to the at least one terminal in the learning iteration to obtain training result information from the at least one terminal, and update a FL model based on the training result information, and based on the AF being notified of the congestion control application related information, the FL model may be updated without the training result information of the at least one terminal to which congestion control is applied.

Also, as an example of the present disclosure, the AF may transmit a request to newly determine at least one terminal participating in the learning iteration based on the FL operation.

Also, as an example of the present disclosure, the subscription request for the congestion control application related information event may be received from an artificial intelligence/machine learning (AI/ML) network function (NF) based on an application function (AF) request.

Also, as an example of the present disclosure, the network function may be a session management function (SMF), and the SMF may receive the subscription request for the congestion control application related information event from a network exposure function (NEF) based on the at least one terminal and a PDU (protocol data unit) session, and the NEF may send the subscription request for the congestion control application related information event to the SMF based on an AF request.

Also, as an example of the present disclosure, the PDU session may be a PDU session for at least one of AI/ML service, operation, traffic or application, or a PDU session used for the FL operation.

Also, as an example of the present disclosure, based on the SMF applying the congestion control to the at least one terminal and the PDU session, the SMF may transmit a NAS message including a backoff timer value to the at least one terminal, and each of the at least one terminal may postpone an operation based on the mobility management backoff timer.

Also, as an example of the present disclosure, the SMF may receive a PDU session modification request message from the at least one terminal, and transmit a PDU session modification reject message including the backoff timer value to the at least one terminal based on the applied congestion control.

Also, as an example of the present disclosure, based on the notification of the congestion control application related information event being performed based on the applied congestion control, the SMF may send congestion control application related information to the NEF, and the NEF may send the congestion control application related information to the AF.

Also, as an example of the present disclosure, the congestion control application related information may include at least one of information indicating that congestion control is applied to the at least one terminal, information indicating that the mobility management backoff timer value is provided to the at least one terminal, mobility management backoff timer information provided to the at least one terminal, information indicating that a reject message for an SM (session management) NAS message is transmitted to the at least one terminal, congestion control level information, DNN (data network name)-based congestion control application indication information or S-NSSAI (single network slice selection assistance information)-based congestion control indication information.

Also, as an example of the present disclosure, the AF may select the at least one terminal for each learning iteration based on the FL operation, and the AF may provide FL model information to the at least one terminal in the learning iteration to obtain training result information from the at least one terminal, and update a FL model based on the training result information, and based on the AF being notified of the congestion control application related information, the FL model may be updated without the training result information of the at least one terminal to which congestion control is applied.

Also, as an example of the present disclosure, the AF may transmit a request to newly determine at least one terminal participating in the learning iteration based on the FL operation.

### Advantageous Effects

The present disclosure can provide a method of performing a notification of congestion control event in a wireless communication system.

The present disclosure can provide a method of setting an NAS level congestion control based event by considering an AI/ML based FL operation in a wireless communication system.

The present disclosure can provide a method of preventing delay in learning iteration by a FL operation in a wireless communication system.

The present disclosure can provide a method of preventing skipping of training result reporting within a learning iteration by a FL operation in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a diagram showing an AI/ML-based endpoint splitting operation applicable to the present disclosure.
FIG. 6 is a diagram showing an AI/ML model distribution method applicable to the present disclosure.
FIG. 7 is a diagram showing a method of performing federated learning-based learning applicable to the present disclosure.
FIG. 8 is a diagram showing a method of receiving a notification of an event after subscribing to a congestion control application related information event provided by an AMF at an AF applicable to the present disclosure.
FIG. 9 is a diagram showing a method of receiving a notification of an event after subscribing to a congestion control application information event provided by an SMF at an AF applicable to the present disclosure.
FIG. 10 is a diagram showing a method of receiving a notification of an event after subscribing to a congestion control application related event provided by an SMF at an AF applicable to the present disclosure.
FIG. 11 is a diagram illustrating a method of receiving a notification of an event after subscribing to a congestion control application related event provided by an SMF at an AF applicable to the present disclosure.
FIG. 12 is a flowchart illustrating a NAS level congestion control based event notification method applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

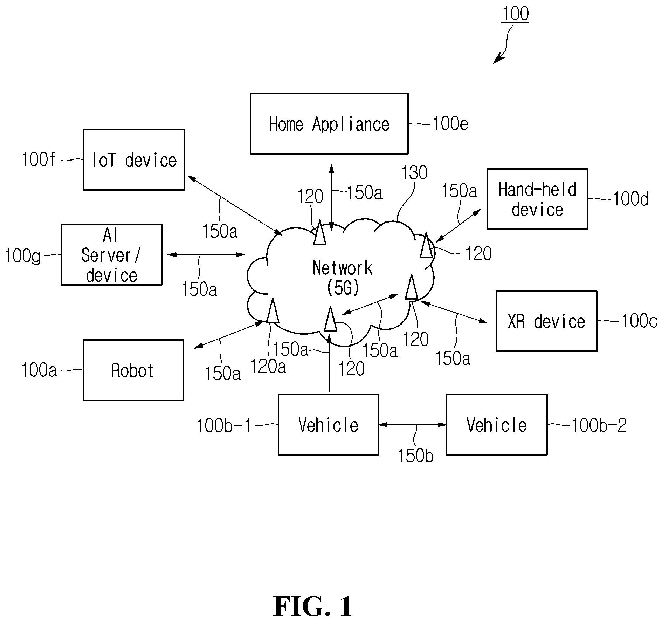

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

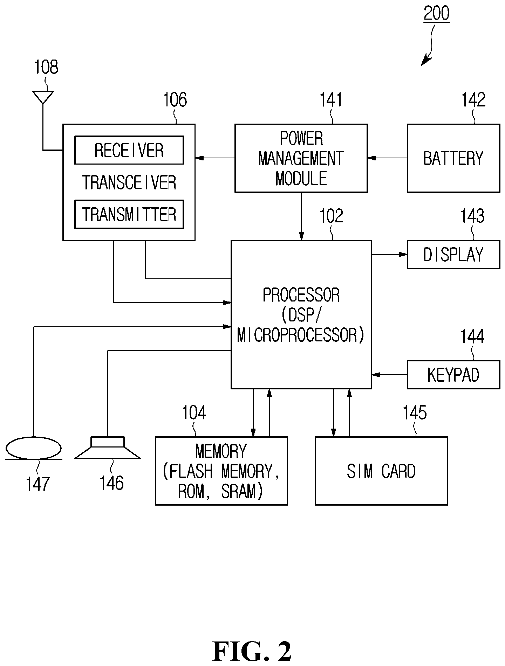

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

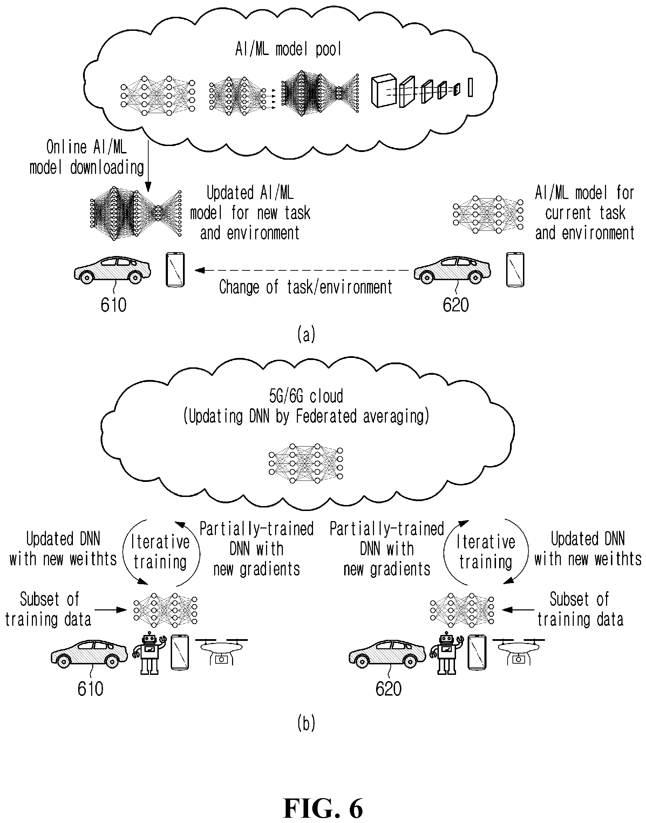

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

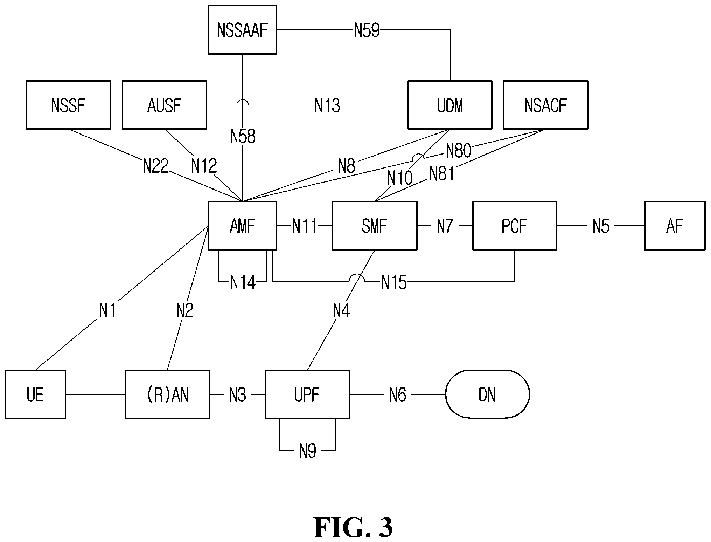

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

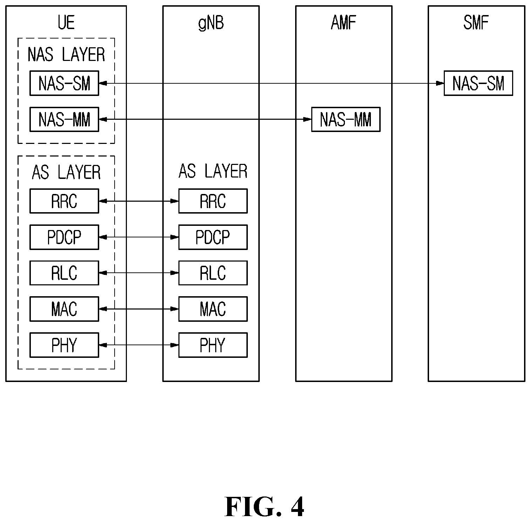

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

AI/ML technology may be applied to an application layer and a network layer. As AI/ML technology, deep learning technology may be applied to the field of wireless resource management and allocation, but may not be limited thereto. In addition, AI/ML technology may also be applied to the MAC layer and physical layer, and in particular, attempts are being made to combine deep learning with wireless transmission at the physical layer.

For example, AI/ML algorithms based on deep learning in a machine learning manner may require a large amount of training data to optimize training parameters. However, there may be limitations in obtaining data in a specific channel environment as training data, and a method of applying AI/ML technology to a network while taking this into consideration will be described below.

Machine learning refers to a series of operations that train a machine to create a machine that can perform tasks that are difficult or impossible for humans to perform. Machine learning requires data and a learning model. In machine learning, data learning methods may be largely divided into three: supervised learning, unsupervised learning, and reinforcement learning. Neural network learning is to minimize output errors. Neural network learning is a process of repeatedly inputting training data to a neural network, calculating error between the target and the output of the neural network for the training data, and backpropagating the error of the neural network from the output layer of the neural network to the input layer in the direction of reducing the error, thereby updating the weight of each node of the neural network. Supervised learning uses training data with correct answers labeled, and unsupervised learning may not use training data without correct answers labeled. That is, for example, in the case of supervised learning for data classification, the training data may be data in which each training data is labeled with a category. The labeled training data is input to the neural network, and the error may be calculated by comparing the output (category) of the neural network with the label of the training data. The calculated error is backpropagated from the neural network in the reverse direction (i.e., from the output layer to the input layer), and the connection weight of each node in each layer of the neural network may be updated according to the backpropagation. The amount of change in the connection weight of each node to be updated may be determined according to the learning rate. The neural network's calculation of the input data and the backpropagation of the error may constitute a learning cycle (epoch). The learning rate may be applied differently according to the number of repetitions of the learning cycle of the neural network. For example, in the early stage of learning of the neural network, a high learning rate may be used so that the neural network can quickly acquire a certain level of performance, thereby increasing efficiency, and in the later stage of learning, a low learning rate may be used to increase accuracy. In addition, as an example, the learning method may vary depending on the characteristics of the data. For example, if the purpose is to accurately predict data transmitted from a transmitter in a communication system at a receiver, it is preferable to perform learning using supervised learning rather than unsupervised learning or reinforcement learning. The learning model corresponds to the human brain, and the most basic linear model may be considered, but the machine learning paradigm that uses a highly complex neural network structure such as an artificial neural network as a learning model may be called deep learning. The neural network core used as a learning method may largely include deep neural networks (DNN), convolutional deep neural networks (CNN), and recurrent Boltzmann machines (RNN), and these learning models may be applied.

Hereinafter, a method of performing AI/ML service and application support and AI/ML traffic transmission through the support of 5GS considering the above-described AI/ML technology will be described. For example, learning may be performed on a learning model based on the AI/ML technology, and inference may be performed through the learning model on which learning has been performed. Here, the network may support the above-described learning and inference operations. As a more specific example, the AI/ML operation of the application layer may support the operations of Table 1 below. Referring to Table 1 below, the AI/ML task division point of the AI/ML endpoint may be determined considering the relationship between entities. As another example, the AI/ML model and data may be distributed and shared through 5GS. As another example, 5GS may support federated learning (FL) and may apply model parameters of FL, but may not be limited thereto.

| |
|---|
| **- AI/ML operation splitting between AI/ML endpoints;** |
| **- AI/ML model/data distribution and sharing over 5G system;** |
| **- Distributed/Federated Learning over 5G system.** |

In addition, the network may support network resource utilization monitoring operations to support AI/ML functions of the application layer. In addition, the network may perform support by determining whether to expose information acquired to support AI/ML functions (e.g., location, QoS, load, congestion, etc.) and to which entity to expose the information. In addition, the network may acquire and manage information to support AI/ML functions, and is not limited to a specific embodiment.

As another example, the network may support federated learning (FL) and apply model parameters of the FL. That is, the model parameters of the FL may be adapted to the communication environment and signal transmission may be performed. The network may perform at least one of the functions of protecting personal privacy, reducing the load of the base station through distributed processing, or reducing traffic between the base station and the terminal through the FL, but may not be limited thereto. For the above-described operation, the network may set FL model parameters and transmit the set FL model parameters to a plurality of terminals. Then, each of the plurality of terminals may update the acquired model parameters based on the acquired training data, and transmit the updated model parameter information to the network. The network may finally update the model parameters based on the model parameter information acquired from each of the plurality of terminals. However, in the above-described process, since local model parameter transmission and reception are required between the network and the terminals, the traffic of the local model parameters may cause a lot of burden in the wireless communication environment, and a method for solving this will be described.

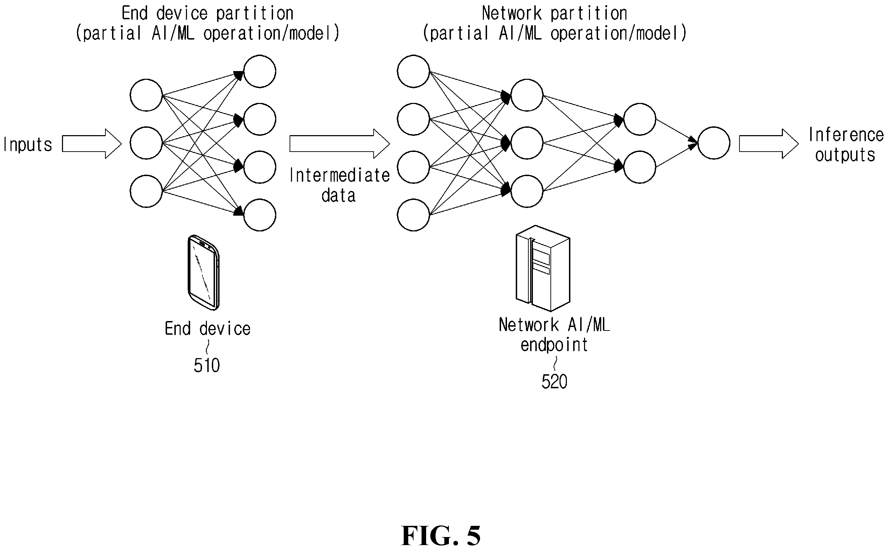

FIG. 5 is a diagram showing an AI/ML-based endpoint splitting operation applicable to the present disclosure. AI/ML may be used in a range of application domains and may replace existing algorithms (e.g., voice recognition, image recognition, video processing, etc.) of devices (e.g., smartphones, vehicles, robots, etc.) within a communication system. For example, the communication system may support at least one of AI/ML operation splitting between AI/ML endpoints of Table 1 described above, distribution/sharing of AI/ML models/data via the communication system, or FL support via the communication system.

Here, referring to FIG. 5, AI/ML operation splitting for AI/ML inference may be considered. AI/ML operation/model may be split into multiple parts considering the current task and environment. Specifically, an endpoint (e.g. terminal) may transfer computation-intensive operation and energy-intensive operation to the network part, and directly process privacy-sensitive operation and delay-sensitive operation. More specifically, partial AI/ML operation/model may be located in an end device 510 and a network AI/ML endpoint 520, respectively. That is, the entire AI/ML model is not configured in one entity, but may be split and located in multiple entities. Here, when inference is performed based on the AI/ML model, the input may be provided as an input of the AI/ML operation/model part in the end device 510. Thereafter, intermediate data may be derived as output from the corresponding AI/ML operation/model portion by the end device 510. The intermediate data may be sent to the network AI/ML endpoint(520 and provided as input to the AI/ML operation/model part within the network. The AI/ML operation/model part within the network may derive final inference output data based on the provided input. That is, the AI/ML operation/model may be split into each entity and perform an appropriate operation considering the task and environment of each entity.

FIG. 6 is a diagram showing an AI/ML model distribution method applicable to the present disclosure. For example, a device with various functions (e.g., a smartphone, a vehicle, a robot, etc.) needs to use multiple AI/ML models in consideration of the task and environment. In other words, the device needs to switch to a suitable AI/ML model and apply it in consideration of the task and environment. Here, since the storage space of the device may be limited, it may not be desirable to configure all candidate AI/ML models in the device. In consideration of the above, the candidate AI/ML models as multiple AI/ML models may be configured as an AI/ML model pool. For example, the AI/ML model pool may be provided in a network and may be distributed from a network endpoint to the device. To this end, a device 610 may continuously monitor the performance of the AI/ML model. As a more specific example, referring to FIG. 6(a), the first device 610 may receive an AI/ML model update request from the second device 620, and acquire a suitable AI/ML model through a network endpoint based on the AI/ML model update request. Here, a second device 620 may continuously monitor the AI/ML model, and if the AI/ML model is not suitable in consideration of new tasks and environments, the second device 620 may request an AI/ML model update from the first device 610. The first device 610 may acquire a suitable AI/ML model from the network, and send information about the same to the second device 620.

As another example, referring to FIG. 6(b), a DNN (deep neural network) by FL may be present in the cloud. Here, model information for the DNN may be sent to the first device 610. The first device 610 may perform some training on the DNN with a subset of training data based on the model information, and send new gradient information to the cloud. The above-described cycle may be repeated, and thereby the DNN by FL in the cloud may be updated. In addition, the model information of the DNN may also be sent to the second device 620. The second device 620 may perform some training on the DNN with the subset of training data based on the model information, and transmit new gradient information to the cloud. The above-described cycle may be repeated, and thereby the DNN by FL in the cloud may be updated. That is, the cloud may obtain updated learning model information based on training data possessed by each of the multiple devices 610 and 620 and synthesize the information to update the overall model information. For example, the device may apply training data to a local model built based on the sent model information and send the gradient to the cloud, and the cloud may update the global model based on the gradient received from the device.

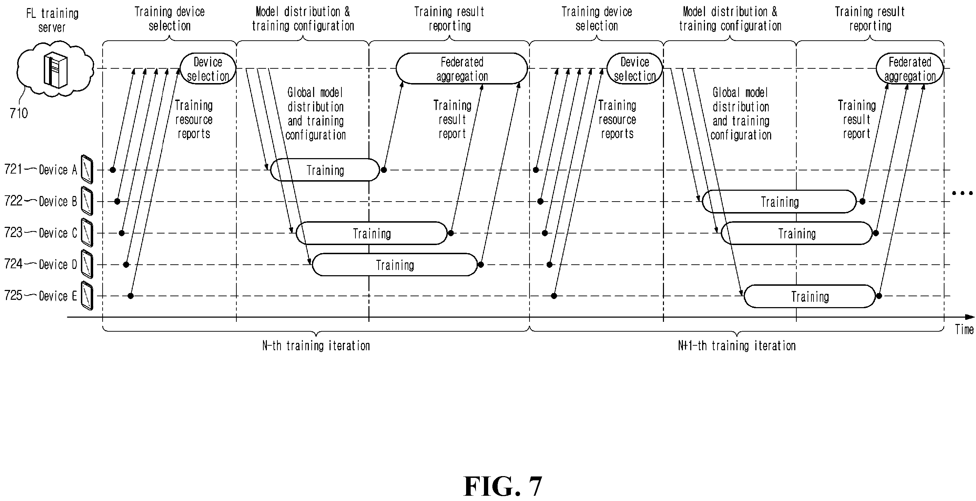

FIG. 7 is a diagram showing a method of performing federated learning-based learning applicable to the present disclosure. Referring to FIG. 7, a FL training server 710 may determine at least one terminal participating in FL learning (or operation). For example, the FL training server 710 may be configured in a network, but may not be limited thereto. Referring to FIG. 7, learning by the FL training server 710 may be iterated at regular intervals. For example, in the N-th learning iteration at a specific interval, the FL training server 710 may receive a training resource report from at least one terminals 721, 722, 723, 724 and 725. The training resource report may include information related to FL training in each of at least one terminals 721, 722, 723, 724 and 725, and may not be limited to a specific form. The FL training server 710 may select a terminal to perform learning in a given cycle based on training resource report information acquired from each of at least one terminals 721, 722, 723, 724 and 725. For example, terminal A 721, terminal C 723, and terminal D 724 may be selected in the N-th learning iteration of FIG. 7, but this is only one example for convenience of explanation and may not be limited thereto. For example, the FL training server 710 may send global model and learning configuration information to terminals 721, 723 and 724 selected in model distribution and training configuration. The global model is a learning model constructed based on FL, and the selected terminals 721, 723 and 724 may construct a local model based on the global model information. Thereafter, each of the selected terminals 721, 723 and 724 may perform learning by applying the acquired training data to the built local model, and report the training result to the FL training server 710. For example, the training result may be a gradient for the DNN, but may not be limited thereto. The FL training server 710 may receive training result reports from each of the selected terminals 721, 723 and 724 in the training result reporting step and update the global model. For example, the terminals participating in the FL operation (or learning) provide a training result report to the FL training server 710 at a preset time for each learning iteration, and the next learning iteration may be initiated based on this. The above-described operation may be iterated for each learning iteration. Here, for example, if the learning environment or conditions (e.g., computing resources of the device, wireless channel conditions, other services of the learning device, etc.) do not change, learning terminal reselection and training reconfiguration may not be required for each learning iteration in which learning is performed. That is, learning terminals of the same group may participate in learning with the same configuration through multiple iterations. However, for example, independent and identical sampling achievement from all terminals may be required, and considering the above-described points, learning terminals may be configured differently depending on the iteration, but may not be limited thereto.

Here, as an example, the following describes a method of applying NAS (non-access stratum) level congestion control to a terminal participating in FL operation (or learning) (or a terminal selected for FL operation (or learning)).

As a specific example, a terminal participating in the FL operation (or learning) needs to provide training results to the server for each learning iteration, but may not be able to provide the training results to the server at a preset timing based on network congestion. In the above-described case, the FL training server may not be able to terminate the learning iteration, resulting in a delay or exceeding the preset time. Here, if the FL training server does not obtain the training result from the terminal, the FL training server may perform a global model update or FL model aggregation without the result, which may adversely affect FL model convergence. As an example, the terminal may obtain a backoff timer value based on NAS level congestion control to postpone signal reception, and the above-described delay may occur based on this. Here, the backoff timer value may be several (tens) minutes or several (tens) hours, but may not be limited thereto. That is, since the network conditions of the communication system (e.g., network congestion conditions, etc.) may affect the operation of AI/ML services/applications, a method of effectively supporting AI/ML services by considering the characteristics of AI/ML services may be necessary, which will be described below.

For example, based on NAS level congestion control, the network may provide the backoff timer value to the terminal, and the terminal may postpone signal transmission based on the backoff timer value. The network may determine the backoff timer differently for each terminal, so that each terminal may transmit a signal at a different timing after the backoff timer. That is, a terminal that has received the backoff timer may not transmit an NAS signal unless the backoff timer expires, a request is received from the network, or a service with a high priority shall be performed.

For example, in a network overload situation, the AMF may reject an NAS message from a terminal using a 5G access network. If the NAS request is rejected, the AMF may send a mobility management backoff timer to the terminal. The terminal may not initiate any other NAS requests until the backoff time expires, except for deregistration procedures or procedures that are not affected by congestion control (e.g., high priority access, emergency services) and mobile end services.

Here, as an example, if the terminal performs a deregistration procedure while the backoff timer is running, the backoff timer may continue to run even after the deregistration procedure. In addition, as an example, if the terminal is already in a CM-CONNECTED state while the backoff timer is running, the terminal may perform a mobility registration update. In addition, if the terminal receives a paging request or an NAS notification message from the AMF while the backoff timer is running, the terminal may stop the backoff timer and start a service request procedure or a mobility registration update procedure through a corresponding access.

Also, as an example, if the terminal is in a CM-IDLE state and has not left a registration area, the terminal may transmit a service request message indicating that the message is excluded from NAS congestion control. As another example, if the terminal is in a CM-IDLE state and has left the registration area, the terminal may transmit a mobility registration update request message including a request indicating that the message is excluded from NAS congestion control.

As another example, if the terminal is in a CM-CONNECTED state, the terminal may transmit a PDU session modification request with PS data off state change via a UL NAS Transport message while the backoff timer continues. Here, the message may be transmitted with an indication that it is excluded from NAS congestion control.

In addition, when NAS MM (mobility management) congestion control is activated in the AMF, if the terminal transmits an NAS MM message indicating that it is excluded from NAS congestion control to the AMF, the AMF may not reject the NAS MM message but may forward an NAS SM (session management) message to a corresponding SMF. Here, the forwarded message may be forwarded with an indication indicating that it is excluded from NAS congestion control. The SMF may confirm that the NAS SM message is not subject to congestion control, and may reject the message if it is subject to congestion control. In addition, as an example, mobility management backoff timer may not be stopped even if cell/RAT/access type and PLMN change are performed. That is, cell/RAT/TA/access type change may not stop the mobility management backoff timer.

As another example, if a 5GSM core network function change or an always-on PDU session request indication needs to be reported while the NAS MM congestion control timer of the terminal is running and MM signaling cannot be initiated, the terminal may postpone initiating the related MM signaling until the MM congestion control timer expires. In addition, if a reserved communication pattern is present in the terminal, the AMF may select a backoff timer value considering the communication pattern of the terminal, so that the terminal does not miss the reserved pattern.

Also, if the terminal is in a CM-CONNECTED state, the AMF may not reject the registration request message for mobility registration update. On the other hand, the AMF may reject the service request message transmitted by the terminal already in the CM-CONNECTED state and the UL NAS transmission message containing the mobility management backoff timer.

As another example, if the terminal receives a DL NAS transmission message from the AMF while the backoff timer is still running, the backoff timer may be stopped. In addition, considering CM-IDLE mobility, the AMF may reject a registration request for mobility registration update by transmitting a registration rejection message including the mobility management backoff timer to the terminal.

For example, as described above, a backoff timer value is provided to the terminal, and the terminal may perform NAS level congestion control by postponing reception of the NAS messages based on the backoff timer value.

As another example, DNN (data network name)-based congestion control may be performed. For example, the SMF may reject a PDU session setup request message or a PDU session modification request message except for the purpose of reporting a PS data off state change for a specific DNN for which a backoff timer is running. Through this, DNN-based congestion control may be applied to the terminal. In addition, as an example, the SMF may transmit a PDU session release command message with a DNN backoff timer to the terminal to release a PDU session belonging to a congested DNN. For example, if the DNN backoff timer is included in the PDU session release command message, a reactivation request may not be set as a reason value.

As another example, when the network data analytic function (NWDAF) is configured, the SMF may determine a backoff timer to be provided to the terminals based on session management congestion control information provided from the NWDAF. For example, when the DNN backoff timer is activated, the terminal may not initiate a session management procedure for a congested DNN. On the other hand, the terminal may perform a session management procedure for another DNN. For example, when there is no DNN associated with the backoff timer, the terminal may initiate a session management request of all PDU session types for a specific DNN. In addition, as an example, in case of cell/TA/PLMN/RAT change, change of unreliable non-3GPP access network, or change of access type, the terminal may not stop the backoff timer. That is, the DNN backoff timer may operate regardless of the above-described procedure.

As another example, even when the DNN backoff timer is activated, the terminal may initiate a session management procedure for high priority access and emergency services. In addition, the terminal may initiate a session management procedure to report a data off state change to the network. In addition, as an example, if the terminal receives a network-initiated session management message other than a PDU session release command for the congested DNN associated with the backoff timer, the terminal may stop the backoff timer and respond to the network. In addition, if the terminal receives a PDU session release command message for a congested DNN, the terminal may stop the backoff timer unless it receives a new backoff timer from the SMF. The terminal may initiate a PDU session release procedure and may not stop the backoff timer when the associated PDU session is released.

In addition, as an example, S-NSSAI (single network slice selection assistance information)-based congestion control may be performed. S-NSSAI-based congestion control may be applied to handle NAS signal congestion of a terminal having a backoff timer associated with S-NSSAI regardless of the presence of DNN. For example, if S-NSSAI is determined to be in a congested state, the SMF may apply S-NSSAI-based congestion control to the terminal for SM requests excluding PS data off state change reports, and may provide a backoff timer and a home public land mobile network (HPLMN) congestion indication. If the terminal receives an S-NSSAI-based backoff timer without an HPLMN congestion indication, the terminal may apply the S-NSSAI backoff timer only to the PLMN from which the backoff time was received. On the other hand, if the terminal receives an S-NSSAI-based backoff timer together with an HPLMN congestion indication, the terminal may apply the S-NSSAI-based backoff timer to both the PLMN from which the backoff time was received and other PLMNs. As another example, the SMF may release a PDU session belonging to a congested S-NSSAI. Here, the SMF may send a PDU session release request message to the terminal, which includes a backoff timer associated with the S-NSSAI or a combination of the S-NSSAI and a specific DNN. For example, if a NWDAF is deployed, the SMF may utilize the session management congestion message provided by the NWDAF to determine the backoff timer to be provided to the terminal.

As described above, NAS level congestion control may be considered, and DNN-based congestion control and S-NSSAI congestion control may be considered. Here, as an example, the NAS level congestion control described above may be applied to a terminal participating in the FL operation (or learning) (or a terminal selected for the FL operation (or learning)). As an example, a terminal participating in the FL operation (learning) may be switched to the CM-IDLE state while performing learning. The terminal needs to be switched to the CM-CONNECTED state to finish learning and transmit the training result to the server. Here, the terminal transmits a service request message to the AMF, but the AMF may apply NAS mobility management congestion control. Accordingly, the AMF may transmit a service reject message including mobility management back-off time information to the terminal, and the terminal may be switched to the CM-CONNECTED state after the backoff timer expires.

As another example, the user plane of the PDU session used to transmit the training result to the FL training server while the terminal participating in the FL operation (learning) performs learning may be deactivated. The terminal needs to activate the user plane of the PDU session to transmit the training result to the server when learning is finished. Accordingly, the terminal may transmit a service request message to the AMF. However, the AMF may apply NAS mobility management congestion control and transmit a service reject message including mobility management backoff timer information to the terminal. Here, the PDU session may be a PDU session used for AI/ML service/operation/traffic/application or a PDU session used for the FL operation (learning), and may not be limited to a specific form.

As another example, the terminal participating in a FL operation (learning) may need to change a PDU session to transmit a training result to a server. For example, a PDU session modification may be needed to modify the QoS (quality of service) of a PDU session or to add a QoS flow. Here, the terminal transmits a PDU session modification request message to the SMF, but the SMF may transmit a PDU session modification reject message including backoff timer information by applying DNN based congestion control or S-NSSAI based congestion control. Here, the PDU session may be a PDU session used for AI/ML service/operation/traffic/application or a PDU session used for the FL operation (learning), and may not be limited to a specific form.

As described above, if the terminal postpones the transmission of the training result based on the backoff timer based on the NAS congestion control, the FL training server may not obtain the training result from the corresponding learning iteration. Accordingly, the FL training server may terminate the corresponding learning iteration without receiving the training result and perform a global model update. In other words, the FL training server shall skip the corresponding training result and perform a global model update, which may adversely affect model update convergence. As another example, the FL training server may wait while the terminal postpones transmission to receive the training result and terminate the learning iteration after receiving the training result, but this may cause a delay. As an example, the backoff timer value may be several (tens) minutes or several (tens) hours, but may not be limited thereto.

That is, in the above-described situation, since network congestion may affect the operation of AI/ML services/applications, a method of effectively supporting AI/ML services by considering the characteristics of AI/ML services may be necessary, which will be described below.

For example, a congestion control-related event support method considering an AI/ML services may be composed of a combination of one or more of the following operations/configurations/steps, and is not limited to a specific form.

For example, the AI/ML service may be used interchangeably with AI/ML-based service, AI/ML traffic, AI/ML application, AI/ML transmission, AI/ML operation, and AI/ML operational traffic below, and is not limited to a specific form.

In addition, as an example, it may be used interchangeably with the FL (Federated Learning) operation, FL training, FL training operation, and distributed learning operation below, and is not limited to a specific form.

In addition, UE (user equipment) and terminal may be used interchangeably below, but may not be limited thereto. In addition, as an example, AF (application function), AS (application server) and server may be used interchangeably and are not limited to a specific form. As an example, AF and AS may be AI/ML AF and AI/ML AS, but may not be limited thereto. As an example, although a congestion control-related event support method based on an AI/ML service is described below, it is not limited to the AI/ML service and may be applicable to other services and is not limited to a specific form.

As an example, the content described below may refer to, but may not be limited to, the operation of a 5G system (e.g., TS 23.501, TS 23.502, TS 23.503).

### AMF provides congestion control application related information

For example, the AMF may provide a notification service based on a congestion control application related information event to provide congestion control application related information. Here, a new event may be provided through ""Namf_EventExposure service". For example, when setting and subscribing to an event, the AMF may provide a notification service according to the occurrence of the event to a service consumer or service subscriber based on an event ID. That is, the AMF may notify information corresponding to the event that occurred based on the event ID, and for this purpose, event related operation may be supported. As a specific example, "Namf_EventExposure_Subscribe" for event subscription, "Namf _EventExposure_UnSubscribe" for event unsubscription, and "Namf_EventExposure_Notify" operation for event provision according to the event may be supported. That is, subscription, unsubscription, and instruction operations for event provision may be supported. For example, the "Namf_EventExposure service operation" as an event related operation may refer to TS23.502 document, but may not be limited thereto. In addition, as an example, the new event may be defined as a type of UE access and mobility information event. Here, an event ID may be assigned and granted to the new event.

As a more specific example, the congestion control application related information described above may be one of the information notified based on an event. That is, the congestion control application related information may be provided to a service consumer or a service subscriber based on "Namf_EventExposure_Notify" as a notification service according to a congestion control event. Here, the event name is not limited to the congestion control application related information and may be referred to as another name. As an example, the information described above may be included/provided in a combined form, an explicit forms, an implicit forms, a compressive forms, and other various forms of at least one of the information in Table 2 below, and is not limited to a specific form.

As a specific example, referring to Table 2, information indicating that congestion control is applied to a terminal based on the congestion control event may be notified. As another example, information indicating that a backoff timer value and information have been provided to the terminal based on the congestion control event may be notified. As another example, information indicating that a reject message for an MM NAS message is transmitted to the terminal based on the congestion control event may be notified. As another example, the backoff timer value (or information) itself provided to the terminal based on the congestion control event may be notified. Alternatively, the backoff timer value (or information) operated (or initiated) by the terminal based on the congestion control event may be notified.

As another example, congestion control information may be notified based on a congestion control event. As an example, the congestion control information may indicate the degree of congestion as high/medium/low as congestion control level information. As another example, the degree of congestion may be indicated by an index (e.g., 0~100) as congestion control level information, but may not be limited thereto.

**[Table 2]**

| |
|---|
| 1) information indicating that congestion control has been applied to the UE |
| 2) information indicating that back-off time value/information has been provided to the UE |
| 3) information indicating that a reject message for an MM NAS message has been transmitted to the UE |
| 4) back-off time value/information provided to the UE |
| 5) congestion control information/level |

As another example, the AF may subscribe to a congestion control application related information event provided by the AMF for a specific terminal(s). Here, the event name may be congestion control application related information event, but this is only a name for convenience of explanation and may not be limited thereto. Here, the event subscription may be made directly to the AMF. As another example, the event subscription may be performed through the NEF. When subscribing to the event through the NEF, the NEF may subscribe to the event to the AMF for the AF. Here, the NEF may subscribe to the event directly to the AMF or through another network function (e.g., UDM, PCF).

For event subscription, the above-described event operations (e.g. Namf_EventExposure, Nnef_EventExposure, Nudm_EventExposure) may be considered, and the operations may be extended (or modified) and used by considering the following. For example, the terminal(s) may be terminal(s) selected (or determined) for FL operation (or learning). Here, the information indicating the terminal(s) may be target information of event reporting (e.g., GPSI, SUPI, etc.). For example, the target information of event reporting may consider the "Nnef_EventExposure_Subscribe operation" operation of TS 23.502, but may not be limited thereto.

That is, the terminals selected for the FL operation may be directed to the target terminals and subscribe to the corresponding event. Here, the corresponding event subscription may be a request for congestion control application related information. For example, when the AF obtains congestion control related information based on a notification service of a congestion control application related information event, the AF may perform at least one of the operations in Table 3 below.

For example, the AF may recognize that the learning iteration requires a longer time than the time previously set by the congestion control. As another example, the AF may update the global model without the training results for the terminals to which the congestion control is applied. In other words, the AF may skip the training results for the terminals to which the congestion control is applied and update the global model. As an example, the global model update may mean FL model aggregation. As another example, the AF may recognize that new member terminal(s) need to be selected/determined for the FL operation (or learning). After that, the AF may request provision of new member terminal(s) to the network.

**[Table 3]**

| |
|---|
| a) It is recognized that it takes longer than expected to complete the iteration |
| b) The AF determines to update the global model (or perform FL model aggregation) without training results from UEs to which congestion control is applied (or skips training results from the UEs) |
| c) The AF recognizes that new member UEs need to be selected/determined for FL operation. This may lead to a request for provision of new member UEs to the 5G core network. |

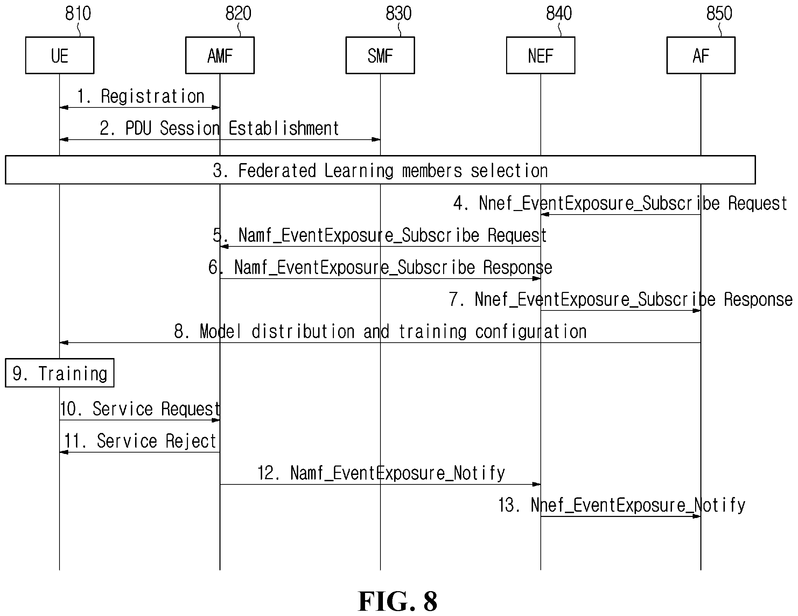

FIG. 8 is a diagram showing a method of receiving a notification of an event after subscribing to a congestion control application related information event provided by an AMF at an AF applicable to the present disclosure.

Referring to FIG. 8, a terminal 810 may perform registration in a network and establish a PDU session. For example, the PDU session may be a PDU session set for at least one of AI/ML service, operation, traffic, or application. As another example, the PDU session may be a PDU session used for FL operation (or learning). As another example, the PDU session may be a PDU session used for other services other than AI/ML services, and is not limited to a specific embodiment. Thereafter, a AF 850 may select (or determine) member terminals for the FL operation (or learning). As an example, the AF 850 may interact with other network functions and terminals for the FL operation (or learning). As an example, referring to FIG. 7, the terminals may perform learning resource reports, and member terminals that perform the FL operation (or learning) may be determined based on the reports, but may not be limited thereto. As an example, member terminal selection may refer to, but is not limited to, TR 23.700-80.

Thereafter, the AF 850 may transmit a subscription request for a congestion control application related information event to an NEF 840 for the member terminals for the FL operation (or learning). For example, the subscription request for the event may be performed for each terminal or may be performed together for multiple terminals, and is not limited to a specific form. Thereafter, the NEF may transmit a subscription request for a congestion control application related information event to an AMF 820 for the terminals for which the subscription request for the event has been made. For example, the NEF may query serving AMF information of the terminal with the UDM, and in response thereto, may confirm the serving AMF of each terminal. For example, when the AMF serving the 3GPP access and the AMF serving the non-3GPP access are different, the NEF 840 may transmit the above-described subscription request for the event to both AMFs. As another example, the NEF may transmit the subscription request for event to one AMF (e.g., the AMF serving the 3GPP access), and is not limited to a specific form. Thereafter, the AMF 840 may transmit a response message to the NEF 840 for the received subscription request, and the NEF 840 may transmit a response message to the AF 850 for the received subscription request. Thereafter, the AF 850 may distribute the model to terminals participating in FL operation (or learning) and set learning. That is, the AF 850 may send FL model information to terminals participating in learning and send setting information necessary for learning. For example, the operation may be performed through application layer signaling/message, but is not limited thereto.

Thereafter, the terminal 810 may perform learning on the local model built based on the received model information, and after learning, the terminal 810 may terminate the local learning and transmit the training result to AF. However, while the terminal 810 performs learning, it may be in a CM-IDEL state or the user plane of the PDU session may be in a deactivated state.

Accordingly, the terminal 810 may switch to the CM-CONNECTED state or transmit a service request message to the AMF 820 for user plane activation of the PDU session. Here, as an example, the AMF 820 may apply congestion control based on the network congestion state. When the AMF 820 applies congestion control, the AMF 820 may transmit a service rejection message including a backoff timer value to the terminal 810. In addition, the AMF 820 may transmit a notification of the event to the NEF 840 based on the congestion control application related information event. As an example, the AMF 820 may transmit the notification of the event to the NEF 840 after transmitting the service reject message to the terminal 810. As another example, the AMF 820 may transmit the notification of the event to the NEF 840 simultaneously with transmitting the service reject message to the terminal 810. Thereafter, the NEF 840 may transmit a notification of a congestion control application related information event to the AF 850. As another example, the NEF 840 may select new member terminals for FL operation (or learning) and transmit them to the AF 850, but is not limited to a specific embodiment.

As another example, a network function (NF) that performs operations related to selection (or determination) of member terminal(s) for FL operation (or learning) may subscribe to a congestion control application related information event provided by the AMF. As an example, the event name is only one example for convenience of explanation and may not be limited thereto.

In addition, the above-described NF may be an NF that performs the above-described event subscription for the FL operation (learning) as an existing NF (e.g., NEF, PCF, NWDAF, etc.). As another example, the NF may be a newly defined NF related to member terminal selection (or determination) for the FL operation (learning). As an example, the newly defined NF may be an AI/ML NF, but this is only a configuration for the convenience of explanation and is not limited to the name. In addition, as an example, the operation related to member terminal(s) selection (or determination) for the FL operation (or learning) may include providing the AF with a member terminal list for the FL operation. As an example, the terminal list may be a candidate terminal list, but may not be limited thereto. As an example, the operation of member terminal(s) selection (or determination) for the FL operation (learning) may refer to TR 23.700-80, but may not be limited thereto.

As another example, the operation related to selection (or determination) of member terminal(s) for FL operation (or learning) may include providing assistance information related to the FL operation (or learning) to the AF. As an example, the FL operation (or learning) may be an AI/ML operation (or learning) and is not limited to a specific form.

In addition, an NF performing an operation related to selection (or determination) of member terminals for FL operation (or learning) may subscribe to a congestion control application related information event provided by the AMF. For example, the NF may be requested by the AF to provide a member terminal list (or auxiliary information related to the FL operation (or learning)) for FL operation (or learning) and may subscribe to an event to the AMF for the terminals described above for selection (or determination) of member terminals (or candidate terminals).

As another example, the NF may provide the above-described terminal list to the AF, and then receive a final selected (or determined) terminal list from the AF and subscribe to the above-described event to the AMF for the corresponding terminals, without being limited to a specific form.

Also, as an example, the event subscription described above may be performed directly to the AMF. As another example, the event subscription may be performed through the NEF. When performing the event subscription via the NEF, the event may be subscribed directly to the AMF or may be subscribed through another NF (e.g., UDM, PCF).

For example, event subscription may be performed based on existing event related operations (e.g., Namf_EventExposure, Nnef_EventExposure, Nudm_EventExposure), and may be extended (or modified) and used for the purpose proposed in this specification. Also, for example, event subscription may be a request for congestion control application related information.

For example, when the NF performing operation of selecting (or determining) member terminals for FL operation (or learning) receives information according to a notification service based on a congestion control application related information event, the NF may perform at least one of the operations in Table 4 below. For example, the NF may send the event notification to the AF. As another example, the NF may recognize that new member terminals for FL operation (or learning) need to be selected (or determined), and may select (or determine) new member terminals and provide the corresponding information to the AF.

**[Table 4]**

| |
|---|
| A) A notification of a congestion control application related information event is sent to the AF. |
| B) It is recognized that new member UEs need to be selected/determined for FL operation. Therefore, new member UEs are selected/determined and are provided to the AF. |

### SMF provides congestion control application related information

For example, the SMF may provide a notification service based on a congestion control application related information event to provide congestion control application related information. Here, a new event may be provided through an event operation "Nsmf_EventExposure service".

For example, when setting and subscribing to an event, the SMF may provide a notification service according to the occurrence of the event based on an event ID. That is, the SMF may notify information corresponding to the event that occurred based on the event ID, and for this purpose, event related operation may be supported. As a specific example, "Nsmf_EventExposure_Subscribe" for event subscription, "Nsmf_EventExposure_UnSubscribe" for event unsubscription, and "Nsmf_EventExposure_Notify" for operation for event provision according to the event may be supported. That is, subscription, unsubscription, and instruction operations for event provision may be supported. As an example, "Nsmf_EventExposure service operation" as an event related operation may refer to the TS23.502 document, but may not be limited thereto.

In addition, as an example, an event ID may be assigned and granted to a new event. As a more specific example, the congestion control application related information described above may be notified as one or more pieces of information during the events. That is, the congestion control application related information may be provided to a service consumer or a service subscriber through "Nsmf_EventExposure_Notify". Here, the event name is not limited to the congestion control application related information and may be referred to as another name. As an example, the information described above may be included/provided in a combined form, an explicit forms, an implicit forms, a compressive forms, and other various forms of at least one of the information in Table 5 below, and is not limited to a specific form. As a specific example, information indicating that congestion control is applied to the terminal based on a congestion control event may be notified. As another example, information indicating that a backoff timer value and information have been provided to the terminal based on a congestion control event may be notified. As another example, information indicating that a reject message for an SM NAS message is transmitted to the terminal based on a congestion control event may be notified. As another example, the backoff timer value (or information) itself provided to the terminal based on the congestion control event may be notified. Alternatively, the backoff timer value (or information) operated (or initiated) by the terminal based on the congestion control event may be notified.

As another example, congestion control information may be notified based on a congestion control event. As an example, the congestion control information may indicate the degree of congestion as high/medium/low as congestion control level information. As another example, the degree of congestion may be indicated by an index (e.g. 0~100) as congestion control level information, but may not be limited thereto. As another example, information indicating that DNN based congestion control has been applied based on the congestion control event may be notified. Here, as an example, DNN information may be further included, but may not be limited thereto. As another example, information indicating that S-NSSAI-based congestion control has been applied based on the congestion control event may be notified. Here, as an example, S-NSSAI information may be further included, but may not be limited thereto.

**[Table 5]**

| |
|---|
| 1) information indicating that congestion control has been applied to the UE |
| 2) information indicating that back-off time value/information has been provided to the UE |
| 3) information indicating that a reject message for an MM NAS message has been transmitted to the UE |
| 4) back-off time value/information provided to the UE (back-off timer value/information which shall be operated/initiated by the UE) |
| 5) congestion control information/level |
| 6) information indicating that DNN based congestion control has been applied. DNN information is further included. |
| 7) information indicating that S-NSSAI based congestion control has been applied. S-NSSAI information is further included. |

For example, the AF may subscribe to a congestion control application related information event provided by the SMF for at least one of specific terminal(s) or PDU sessions. Here, the event name may be congestion control application related information event, but this is only a name for convenience of explanation and may not be limited thereto. Here, the event subscription may be made directly to the SMF. As another example, the event subscription may be performed through the NEF. When subscribing to the event through the NEF, the NEF may subscribe to the event to the SMF for the AF. Here, the NEF may subscribe to the event directly to the SMF or may subscribe through another network function (e.g., UDM, PCF).

For event subscription, the above-described event operation may be considered, and the operation may be extended (or modified) and used considering the following. For example, the terminal(s) may be terminal(s) selected (or determined) for FL operation (or learning). Also, for example, the PDU session may be a PDU session used for AI/ML service/operation/traffic/application. For another example, the PDU session may be a PDU session used for FL operation (or learning). For example, information indicating at least one of the terminal(s) or the PDU session may be target information of event reporting (e.g., GPSI, SUPI, etc.). For example, the target information of event reporting may consider the "Nnef_EventExposure_Subscribe operation" operation of TS 23.502, but may not be limited thereto. As another example, target information of event reporting may be, but is not limited to, terminal address (i.e., IP address or MAC address) information of "Nnef_AFsessionWithQoS_Create service operation" of TS 23.502.

That is, terminals selected for FL operation may be directed to target terminals and subscribe to the corresponding event. Here, the event subscription may be a request for congestion control application related information.

For example, when the AF obtains congestion control related information based on a notification service based on a congestion control application related information event, the AF may perform at least one of the operations in Table 6 below.

For example, the AF may recognize that the learning iteration requires a longer time than the time preset by the congestion control. As another example, the AF may update the global model without training results for the terminals to which the congestion control is applied. In other words, the AF may skip training results for the terminals to which the congestion control is applied and update the global model. As an example, the global model update may mean FL model aggregation. As another example, the AF may recognize that new member terminal(s) need to be selected/determined for the FL operation (or learning). After that, the AF may request provision of new member terminal(s) to the network.

**[Table 6]**

| |
|---|
| a) It is recognized that it takes longer than expected to complete the iteration |
| b) The AF determines to update the global model (or perform FL model aggregation) without training results from UEs to which congestion control is applied (or skips training results from the UEs) |
| c) The AF recognizes that new member UEs need to be selected/determined for FL operation. This may lead to a request for provision of new member UEs to the 5G core network. |

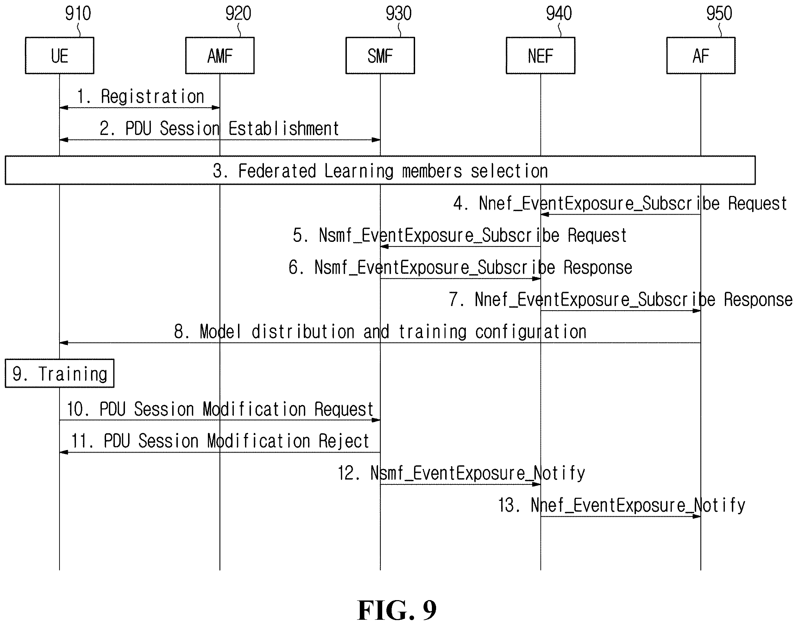

FIG. 9 is a diagram showing a method of receiving a notification of an event after subscribing to a congestion control application information event provided by an SMF at an AF applicable to the present disclosure.

Referring to FIG. 9, a terminal 910 may perform registration in a network and establish a PDU session. For example, the PDU session may be a PDU session set for at least one of AI/ML service, operation, traffic, and application. For another example, the PDU session may be a PDU session used for FL operation (or learning). For another example, the PDU session may be a PDU session used for a service other than the AI/ML service, and is not limited to a specific embodiment.

Thereafter, an AF 950 may select (or determine) member terminals for the FL operation (or learning). For example, the AF 950 may interact with other network functions and terminals for the FL operation (or learning). For example, referring to FIG. 7, terminals may perform learning resource reports, and member terminals that perform the FL operation (or learning) based on the reports may be determined based on the reports, but may not be limited thereto. For example, member terminal selection may refer to TR 23.700-80, but is not limited thereto.

Thereafter, the AF 950 may transmit a subscription request for a congestion control application related information event to an NEF 940 for the member terminals for the FL operation (or learning). For example, the subscription request for the event may be performed for each terminal, or may be performed by multiple terminals together, and is not limited to a specific form. Thereafter, the NEF may transmit the subscription request for the congestion control application related information event to an SMF 930 for the terminals for which the subscription request for event has been made. For example, the NEF may query serving SMF information of the terminals with the UDM, and in response thereto, confirm the serving SMF of each terminal. Thereafter, the SMF 930 may transmit a response message for the received subscription request to the NEF 940, and the NEF 940 may transmit a response message for the subscription request received from the AF 850 to the AF 950. Thereafter, the AF 950 may distribute the model to the terminals participating in the FL operation (or learning) and set up learning. That is, the AF 950 may send FL model information to terminals participating in learning and send setting information required for learning. For example, the operation may be performed through application layer signaling/message, but is not limited thereto.

Thereafter, the terminal 910 may perform learning on the local model built based on the received model information, and after learning, the terminal 910 may terminate the local learning and transmit the training result to the AF. Here, as an example, the terminal 910 needs to perform a PDU session modification. As an example, the terminal 910 may perform a PDU session modification to modify QoS or add a QoS flow. To this end, the terminal 910 may transmit a PDU session modification request message to the SMF 930. Thereafter, the SMF 930 may apply congestion control based on the network congestion state. When the SMF 930 applies congestion control, the SMF 930 may transmit a PDU session modification reject message including a backoff timer value to the terminal 910. In addition, the SMF 930 may transmit a notification of the event to the NEF 940 based on the congestion control application related information event. For example, the SMF 930 may transmit the notification of the event to the NEF 940 after transmitting the PDU session modification reject message to the terminal 910. As another example, the SMF 930 may transmit the notification of the event to the NEF 940 simultaneously with transmitting the PDU session modification reject message to the terminal 910. Thereafter, the NEF 940 may transmit the notification of the congestion control application related information event to the AF 950. As another example, the NEF 940 may select new member terminals for FL operation (or learning) and transmit them to the AF 950, but is not limited to a specific embodiment.

As another example, an NF that performs operations related to selection (or determination) of member terminal(s) for FL operation (or learning) may subscribe to a congestion control application related information event provided by the SMF. As an example, the event name is only one example for convenience of explanation and may not be limited thereto.

In addition, the above-described NF may be an NF that performs the above-described event subscription for the FL operation (learning) as an existing NF (e.g. NEF, PCF, NWDAF, etc.). As another example, the NF may be a newly defined NF related to member terminal selection (or determination) for the FL operation (learning). As an example, the newly defined NF may be an AI/ML NF, but this is only a configuration for the convenience of explanation and is not limited to the name. In addition, as an example, the operation related to member terminal(s) selection (or determination) for the FL operation (or learning) may include providing the AF with a member terminal list for the FL operation. As an example, the terminal list may be a candidate terminal list, but may not be limited thereto. As an example, the operation of member terminal(s) selection (or determination) for the FL operation (learning) may refer to TR 23.700-80, but may not be limited thereto.

As another example, the operation related to selection (or determination) of member terminal(s) for FL operation (or learning) may include providing assistance information related to the FL operation (or learning) to the AF. As an example, the FL operation (or learning) may be an AI/ML operation (or learning) and is not limited to a specific form.

In addition, an NF performing operations related to selection (or determination) of member terminals for FL operation (or learning) may subscribe to a congestion control application related information event provided by the SMF. For example, the NF may be requested by the AF to provide a member terminal list (or auxiliary information related to the FL operation (or learning)) for FL operation (or learning) and may subscribe to an event to the SMF for the terminals described above for selection (or determination) of member terminals (or candidate terminals).

As another example, the NF may provide the above-described terminal list to the AF, and then receive a final selected (or determined) terminal list from the AF and subscribe to the above-described event to the SMF for the corresponding terminals, without being limited to a specific form.

Also, as an example, the event subscription described above may be performed directly to the SMF. As another example, the event subscription may be performed through NEF. When performing the event subscription through the NEF, the event may be subscribed directly to the SMF or may be subscribed through another NF (e.g. UDM, PCF).

For example, event subscription may be performed based on existing event related operations (e.g., Nsmf_EventExposure, Nnef_EventExposure, Nudm_EventExposure), and may be extended (or modified) and used for the purpose proposed in this specification. Also, for example, event subscription may be a request for congestion control application related information.

For example, when the NF performing operation of selecting (or determining) member terminals for FL operation (or learning) receives information according to a notification service based on a congestion control application related information event, the NF may perform at least one of the operations of Table 7 below. For example, the NF may send the event notification to the AF. As another example, the NF may recognize that new member terminals for FL operation (or learning) need to be selected (or determined), and may select (or determine) new member terminals and provide the corresponding information to the AF.

**[Table 7]**

| |
|---|
| A) A notification of a congestion control application related information event is sent to the AF. |
| B) It is recognized that new member UEs need to be selected/determined for FL operation. Therefore, new member UEs are selected/determined and are provided to the AF. |

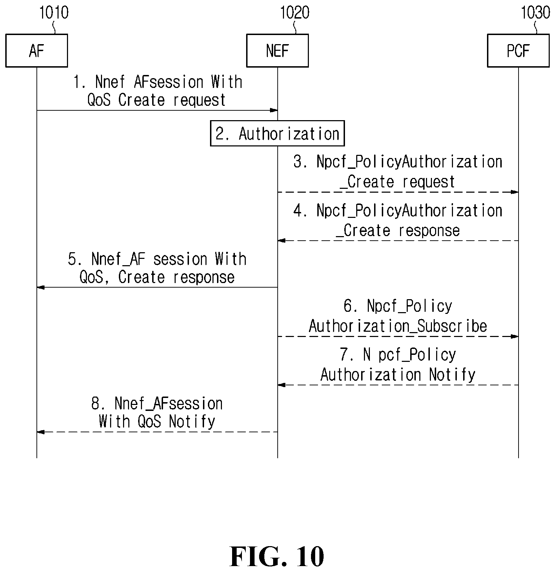

FIG. 10 is a diagram showing a method of receiving a notification of an event after subscribing to a congestion control application related event provided by an SMF at an AF applicable to the present disclosure. Referring to FIG. 10, the AF 1010 may transmit a request message for resource reservation for an AF session to an NEF 1020. Here, the request message may include at least one of a terminal address, an AF identifier, a flow description or an external application identifier, a QoS reference, an alternative service requirement, a DNN, or an S-NSSAI. In addition, the request message may include information on a time period or a traffic volume for the requested QoS. In addition, as an example, the AF 1010 may provide individual QoS parameters instead of a QoS reference. The QoS individual parameters may include at least one of requested 5GS delay, requested priority, requested guaranteed flow bit rate (GFBR), requested maximum flow bit rate (MFBR), flow direction, burst size, burst arrival time at UE (uplink) or UPF (downlink), periodicity, time domain, or time-to-live information.

Here, as an example, the AF 1010 may include at least one of the information of Table 8 below in a combined form, an implicit form, an explicit form, or a compressive form in addition to the above-described request message (e.g., Nnef_AFsessionWithQoS_Create request message). As an example, the information of Table 8 may be request information of a congestion control application related indication. As a specific example, the request message may include information requesting a notification of application of congestion control when congestion control is applied. The request may be subdivided based on the type of congestion control applied. That is, it may be requested to be notified whether it is DNN-based congestion control or S-NSSAI-based congestion control.

Additionally, as an example, the request message may request to inform the UE of provided backoff timer value/information. That is, the request message may request to inform of whether congestion control is applied and information on the backoff timer value provided when congestion control is applied.

**[Table 8]**

| |
|---|
| 1) request to inform of whether congestion control is applied |
| 2) request to inform the UE of provided back-off time value/information (or back-off timer value/information which shall be operated/initiated by the UE) |

Thereafter, the NEF 1020 may perform authorization based on the request message received from the AF 1010. Here, the NEF 1020 may authorize the request of the AF 1010 after assigning a transaction reference ID to the request message. Thereafter, the NEF 1020 may apply QoS control policy for the AF. For example, if authorization for the AF 1010 request is rejected, the NEF 1020 may send a result value indicating authorization failure to the AF 1020.

Here, if the NEF 1020 does not receive the individual QoS parameters described above from the AF 1010, the NEF 1020 may search for a PCF in a BSF (binding support function) based on the terminal address. The NEF 1020 may trigger a PCF policy authorization creation request (e.g., Npcf_PolicyAuthorization_Create) and forward it to the PCF 1030. Thereafter, the NEF 1020 may receive a response message from the PCF 1030 and provide at least one of the terminal address, the AF identifier, the flow description, the QoS reference, or the optional alternative service requirement to the AF 1010 based on the response message. In addition, as an example, the received time period or traffic volume information may be further included in sponsored data connectivity information and provided to the AF 1010. Thereafter, the NEF 1020 may transmit a policy authorization subscription message (e.g., Npcf_PolicyAuthorization_Subscribe) to the PCF 1030 and receive a notification message (e.g., Npcf_PolicyAuthorization_Notfiy) from the PCF 1030 based on this. Here, the NEF 1020 may provide congestion control application related notification request information to the PCF 1030 in step of transmitting the policy authorization request message. As another example, some information about the congestion control application related notification request may be transmitted to the PCF 1030 through the policy authorization request message, and some request information may be transmitted to the PCF 1030 through the policy authorization subscription message.

For example, if the AF 1010 is a subject authenticated by the operator, the AF 1010 can directly transmit a policy authorization creation request message (e.g. the Npcf_PolicyAuthorization_Create) to the PCF 1030 and directly request the PCF 1030 for a reserved resource for the AF session based on the policy authorization creation request message. Here, the AF 1010 can transmit a congestion control application related notification request by including it in the policy authorization creation request message. As described above, the request message (Nnef_AFsessionWithQoS_ Create request message) that the AF 1010 transmits to the NEF 1020 can be replaced with the policy authorization creation request message. As another example, the AF 1010 can provide congestion control application related notification request information through a policy authorization subscription message (e.g. Npcf_PolicyAuthorization_Subscribe). As another example, some of congestion control application related notification request information may be included in the policy authentication creation request message, and the other information may be provided via the policy authentication subscription message, without being limited to a specific embodiment.

In addition, for example, when the PCF 1030 receives a policy authentication create request from the NEF 1020 as described above, the PCF 1030 may determine whether the request is approved. Here, if the request is not approved, the PCF 1030 may instruct the NEF 1020 that the request is not approved. On the other hand, if the request is approved, the PCF 1030 may derive required QoS parameters based on the information provided by the NEF 1020, determine whether this QoS is allowed, and instruct the NEF 1020 of the result. In addition, if an alternative service requirement is provided, the PCF 1030 may derive an alternative QoS parameter set in the same priority order from one or more QoS reference parameters included in the alternative service requirement and inform the NEF 1020 of the result. As an example, the above-described operation may refer to, but may not be limited to, TS 23.503. Here, as an example, if the AF 1010 is considered to be trusted by the operator, the PCF 1030 may directly send a policy authentication create response message to the AF 1010 based on the AF 1010 request.

For example, the alternative QoS parameter set derived by the PCF for a PCC rule may be used to subsequently set up an alternative QoS profile. The alternative QoS profile parameters provided to the NG-RAN may refer to, but may not be limited to, TS 23.501. For example, if the PCF 1030 determines that updated policy information of the SMF is required, the PCF 1030 may transmit an SM Policy Control Update Notification (e.g., Npcf_SMPolicyControl_UpdateNotify) request with updated policy information for the PDU session based on the SM Policy Connection Modification procedure initiated by the PCF.

In addition, after the NEF 1020 receives a response message from the PCF 1030, the NEF 1020 may transmit a response message (e.g., Nnef_AFsessionWithQoS_Create request message) to the AF 1010. Here, the response message may include a transaction reference ID and result information. For example, the result information may be information on whether the request is granted. Thereafter, the NEF 1020 may provide resource allocation and other event information to the PCF 1030 through a policy authorization subscription message (e.g. Npcf_PolicyAuthorization_Subscribe). Here, when the PCF 1030 generates a PCC rule that is provided to the SMF after receiving a request message from the NEF 1020, the PCF 1030 may include the congestion control application related notification request information in the PCC rule based on one or more of the congestion control application related notification request information provided by the AF 1010, the information provided by the NEF 1020 through the request or subscription message, the terminal subscriber information, and the policy set in the PCF 1030. Here, including the congestion control application related notification request information in the PCC rule may be a request that the SMF notify when an event occurs.

In addition, as an example, the terminal subscriber information or the policy set in the PCF may determine that the congestion control application related notification request information is required even if the AF does not provide the congestion control application related notification request information and only provides some of the request information. As an example, if the AF is an AI/ML or FL server, the AF request may enable generation of various information (or policies) based on at least one of the AI/ML (or FL) service, the AI/ML (or FL) application, the AI/ML (or FL) service of the DNN and/or S-NSSAI, and whether the terminal performs the AI/ML (or FL) service.

In addition, as an example, the PCF 1030 may perform an event based notification by transmitting a policy authorization notification message (e.g., Npcf_PolicyAuthorization_Notify) to the NEF 1020 when an event condition is satisfied. In addition, the NEF 1020 may transmit an event notification from the PCF 1030 to the AF 1010 through a notification message (e.g.,
Nnef_AFsessionWithQoS_Notify).

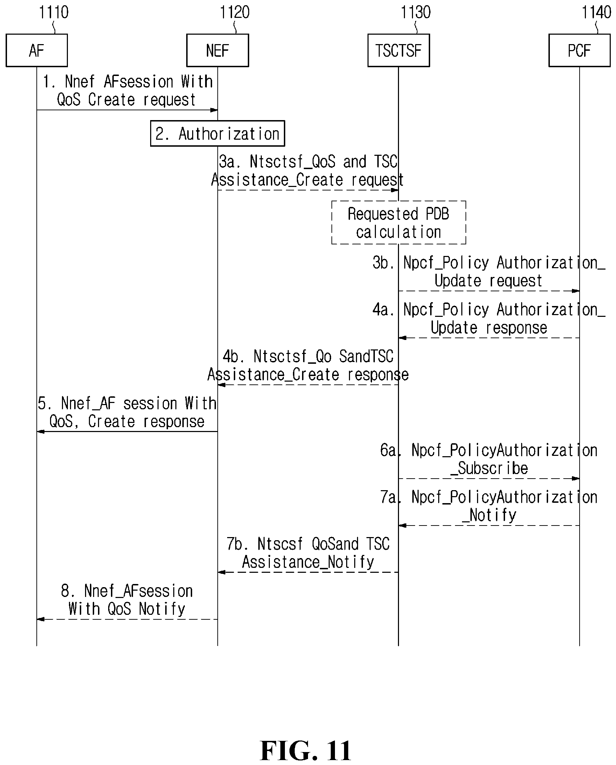

FIG. 11 is a diagram illustrating a method of receiving a notification of an event after subscribing to a congestion control application related event provided by an SMF at an AF applicable to the present disclosure. Referring to FIG. 11, an AF 1110 may transmit a request message for resource reservation for an AF session to an NEF 1120. Here, the request message may include at least one of a terminal address, an AF identifier, a flow description or an external application identifier, a QoS reference, an alternative service requirement, a DNN, or an S-NSSAI. In addition, the request message may include information about a time period or a traffic volume for the requested QoS. The AF 1110 may provide individual QoS parameters instead of a QoS reference. For example, the QoS individual parameters may include at least one of requested 5GS delay, requested priority, requested GFBR, requested MFBR, flow direction, burst size, burst arrival time at UE (uplink) or UPF (downlink), periodicity, time domain and time-to-live information.

Here, as an example, the AF 1110 may additionally include at least one of the information of Table 8 described above in a combined form, an implicit form, an explicit form, or a compressive form in addition to the above-described request message (e.g., Nnef_AFsessionWithQoS_Create request message). As an example, the information of Table 8 may be request information of a congestion control application related indication. As a specific example, the request message may include information requesting a notification of application of congestion control when congestion control is applied. As an example, the request may be subdivided based on the type of congestion control applied. That is, it may be requested to be notified whether it is DNN-based congestion control or S-NSSAI-based congestion control.

Additionally, as an example, the request message may request to inform the terminal of provided backoff timer value/information. That is, the request message may request to inform of whether congestion control is applied and the backoff timer value provided when congestion control is applied.

Thereafter, the NEF 1120 may perform authorization based on the request message received from the AF 1110. Here, the NEF 1120 may authorize the request of the AF 1110 after assigning a transaction reference ID to the request message. Thereafter, the NEF 1120 may apply a policy to control the amount of QoS for the AF. For example, if authorization for the AF 1110 request is rejected, the NEF 1120 may send a result value indicating authorization failure to the AF 1110.

Here, as an example, if the NEF 1120 receives the individual QoS parameters described above from the AF 1110, the NEF 1120 may transmit a request message (e.g., Ntsctsf_QoSandTSCAssistance_Create) including the received individual QoS parameters to a TSCTSF (time sensitive communication time synchronization function) 1130. As an example, if the AF 1110 is considered to be trusted by the operator, the AF 1110 may transmit the request message directly to the TSCTSF 1130. As an example, one TSCTSF may exist per DNN/S-NNAI, and the TSCTSF address may be set to the NEF 1120. Thereafter, the TSCTSF 1130 may send a policy authorization update (e.g., Npcf_PolicyAuthorization_Update) request to a PCF 1140. Thereafter, the TSCTSF 1130 may receive a policy authorization update (e.g., Npcf_PolicyAuthorization_Update) response from the PCF 1140. Here, the PCF 1140 may determine whether the request received from TSCTSF 1130 is authorized, and if not authorized, may notify the TSCTSF 1130 of the corresponding information. On the other hand, if the request is authorized, the PCF 1140 may derive the required QoS parameters based on the information provided by the TSCTSF 1130, determine whether the corresponding QoS is allowed, and then present the result information to the TSCTSF 1130. Additionally, for example, if an alternative service requirement is provided, the PCF 1140 may derive an alternative QoS parameter set in the same priority order from one or more QoS reference parameters included in the alternative service requirement, and notify the TSCTSF 1130 of the resulting information.

For example, if the PCF 1140 receives individual QoS parameters instead of QoS reference, the PCF 1140 may set a PDB and an MDBV based on the requested PBD and burst size received from the TSCTSF 1130. For example, if the requested PDB is not provided, the PCF 1140 may determine a PDB that matches the QoS reference. Additionally, the PCF 1140 may set a GFBR and an MFBR based on the requested values sent by the TSCTSF 1130. The PCF 1140 may use the requested priority received from the AF 1110 to determine QoS flow priority. The TSCTSF 1130 may prioritize individual QoS parameter values over the default value of 5QI. Additionally, as an example, if the request is not authorized or the required QoS is not allowed, the TSCTSF 1130 may send, the NEF 1120, a response to that includes a result value indicating the cause of failure. Here, the response message may include a transaction reference ID and result information. As an example, the result information may indicate whether the request is authorized. Additionally, as an example, if the AF is considered to be trusted by the operator, the AF 1110 may directly receive the response message from the TSCTSF 1130, and is not limited to a specific embodiment.

Thereafter, the TSCTSF 1130 may transmit a policy authorization subscription message (e.g., Npcf_PolicyAuthorization_Subscribe) to the PCF 1140 for resource allocation and other event information. Thereafter, the PCF 1140 may perform an event based notification by transmitting a policy authorization notification message (e.g., Npcf_PolicyAuthorization_Notify) to the TSCTSF 1130 if an event condition is satisfied. In addition, the TSCTSF 1130 may transmit an event notification from the PCF 1140 to the NEF 1120 through a notification message (e.g., Ntsctsf_QoSandTSCAssistance_Notify). In addition, the NEF 1120 may transmit an event notification to the AF through a notification message (e.g., Nnef_AFsessionWithQoS_Notify).

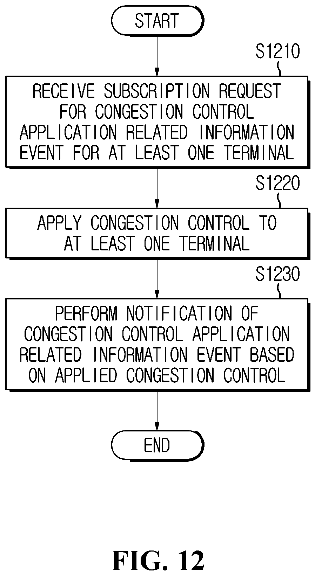

FIG. 12 is a flowchart illustrating a NAS level congestion control based event notification method applicable to the present disclosure. Referring to FIG. 12, a network function may receive a subscription request for a congestion control application related information event for at least one terminal. (S1210) Then, the network function may apply congestion control to at least one terminal. (S1220) Based on the applied congestion control, a notification of a congestion control application related information event may be performed. (S1230) Here, at least one terminal may be terminals selected based on a federated learning (FL) operation.

For example, the network function may be an AMF. Here, the AMF may receive a subscription request for a congestion control application related information event from an NEF. That is, the NEF may send the subscription request for the congestion control application related information event to the AMF based on the AF request, as described above.

When the AMF applies congestion control to at least one terminal, the AMF may transmit an NAS message including a mobility management backoff timer value to at least one terminal. For example, each of at least one terminal may postpone an operation based on the mobility management backoff timer.

In addition, when performing a notification of a congestion control application related information event based on the applied congestion control, the AMF may send congestion control application related information to the NEF, and the NEF may transmit the congestion control application related information to the AF. Here, the congestion control application related information may include at least one of information indicating that congestion control is applied to at least one terminal, information indicating that a mobility management backoff timer value is provided to at least one terminal, information indicating that a reject message for an MM NAS message is transmitted to at least one terminal, or congestion control level information, as described above. In addition, the AF may select at least one terminal for each learning iteration based on the FL operation. The AF may obtain training result information from at least one terminal by providing FL model information to at least one terminal in the learning iteration. The AF may update the FL model based on the training result information. Here, when the AF is notified of the congestion control application related information, the FL model may be updated without training result information of at least one terminal to which congestion control is applied. As another example, the AF may transmit a request to newly determine at least one terminal participating in the learning iteration based on the FL operation. As another example, the subscription request for the congestion control application related information event may be received from the AI/ML NF based on the AF request, but is not limited thereto.

As another example, the network function is an SMF, and the SMF may receive the subscription request for the congestion control application related information event from the NEF based on at least one terminal and PDU session. The NEF may send the subscription request for the congestion control application related information event to the SMF based on the AF request. Here, the PDU session may be a PDU session for at least one of AI/ML service, operation, traffic or application, or a PDU session used for FL operation, as described above.

In addition, as an example, if the SMF applies congestion control to at least one terminal and PDU session, the SMF may transmit an NAS message including a backoff timer value to at least one terminal. In addition, each of the at least one terminal may postpone an operation based on the mobility management backoff timer.

In addition, as an example, the SMF may receive a PDU session modification request message from at least one terminal, and transmit a PDU session modification reject message including a backoff timer value to at least one terminal based on the applied congestion control. In addition, when performing a notification of a congestion control application related information event based on the applied congestion control, the SMF may send the congestion control application related information to the NEF, and the NEF may send the congestion control application related information to the AF.

Here, as an example, the congestion control application related information may include at least one of information indicating that congestion control is applied to at least one terminal, information indicating that a mobility management backoff timer value is provided to at least one terminal, mobility management backoff timer information provided to at least one terminal, information indicating that a reject message for an SM NAS message is transmitted to at least one terminal, and congestion control level information, DNN-based congestion control application indication information, or S-NSSAI-based congestion control indication information.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a network function in a wireless communication system, the method comprising:
receiving a subscription request for a congestion control application related information event for at least one terminal;
applying congestion control to the at least one terminal; and
performing a notification of the congestion control application related information event based on the applied congestion control,
wherein the at least one terminal is terminals selected based on a federated learning (FL) operation.

2. The method of claim 1,
wherein the network function is an access and mobility management function (AMF), and
wherein the AMF receives the subscription request for the congestion control application related information event from a network exposure function (NEF), the NEF sends the subscription request for the congestion control application related information event to the AMF based on an application function (AF) request.

3. The method of claim 2,
wherein based on the AMF applying the congestion control to the at least one terminal, the AMF transmits a non-access stratum (NAS) message including a mobility management backoff timer value to the at least one terminal, and
wherein each of the at least one terminal postpones an operation based on the mobility management backoff timer.

4. The method of claim 3, wherein based on the notification of the congestion control application related information event being performed based on the applied congestion control, the AMF sends congestion control application related information to the NEF and the NEF sends the congestion control application related information to the AF.

5. The method of claim 4, wherein the congestion control application related information includes at least one of information indicating that congestion control is applied to the at least one terminal, information indicating that the mobility management backoff timer value is provided to the at least one terminal, mobility management backoff timer information provided to the at least one terminal, information indicating that a reject message for an MM (mobility management) NAS message is transmitted to the at least one terminal, or congestion control level information.

6. The method of claim 5,
wherein the AF selects the at least one terminal for each learning iteration based on the FL operation, and the AF provides FL model information to the at least one terminal in the learning iteration to obtain training result information from the at least one terminal, and updates a FL model based on the training result information, and
wherein, based on the AF being notified of the congestion control application related information, the FL model is updated without the training result information of the at least one terminal to which congestion control is applied.

7. The method of claim 6, wherein the AF transmits a request to newly determine at least one terminal participating in the learning iteration based on the FL operation.

8. The method of claim 1, wherein the subscription request for the congestion control application related information event is received from an artificial intelligence/machine learning (AI/ML) network function (NF) based on an application function (AF) request.

9. The method of claim 1,
wherein the network function is a session management function (SMF), and
wherein the SMF receives the subscription request for the congestion control application related information event from a network exposure function (NEF) based on the at least one terminal and a PDU (protocol data unit) session, and the NEF sends the subscription request for the congestion control application related information event to the SMF based on an AF request.

10. The method of claim 9, wherein the PDU session is a PDU session for at least one of AI/ML service, operation, traffic or application, or a PDU session used for the FL operation.

11. The method of claim 9,
wherein based on the SMF applying the congestion control to the at least one terminal and the PDU session, the SMF transmits a NAS message including a backoff timer value to the at least one terminal, and
wherein each of the at least one terminal postpones an operation based on the mobility management backoff timer.

12. The method of claim 11, wherein the SMF receives a PDU session modification request message from the at least one terminal, and transmits a PDU session modification reject message including the backoff timer value to the at least one terminal based on the applied congestion control.

13. The method of claim 11, wherein based on the notification of the congestion control application related information event being performed based on the applied congestion control, the SMF sends congestion control application related information to the NEF, and the NEF sends the congestion control application related information to the AF.

14. The method of claim 13, wherein the congestion control application related information includes at least one of information indicating that congestion control is applied to the at least one terminal, information indicating that the mobility management backoff timer value is provided to the at least one terminal, mobility management backoff timer information provided to the at least one terminal, information indicating that a reject message for an SM (session management) NAS message is transmitted to the at least one terminal, congestion control level information, DNN (data network name)-based congestion control application indication information or S-NSSAI (single network slice selection assistance information)-based congestion control indication information.

15. The method of claim 14,
wherein the AF selects the at least one terminal for each learning iteration based on the FL operation, and the AF provides FL model information to the at least one terminal in the learning iteration to obtain training result information from the at least one terminal, and updates a FL model based on the training result information, and
wherein based on the AF being notified of the congestion control application related information, the FL model is updated without the training result information of the at least one terminal to which congestion control is applied.

16. The method of claim 15, wherein the AF transmits a request to newly determine at least one terminal participating in the learning iteration based on the FL operation.

17. A network function operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
controls the at least one transceiver to receive a subscription request for a congestion control application related information event for at least one terminal;
applies congestion control to the at least one terminal; and
performs a notification of a congestion control application related information event based on the applied congestion control,
wherein the at least one terminal is terminals selected based on a federated learning (FL) operation.

18. A method of operating a terminal in a wireless communication system, the method comprising:
transmitting a request message to a network function;
receiving a response message including a backoff timer from the network function based on congestion control; and
postponing an operation based on the backoff timer,
wherein the terminal is a terminal selected for a FL operation, and
wherein the network function applies the congestion control based on a congestion control application related information event and performs a notification of a congestion control application related information event.

19. A terminal operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
controls the transceiver to transmit a request message to a network function;
controls the transceiver to receive a response message including a backoff timer from the network function based on congestion control; and
postpones an operation based on the backoff timer,
wherein the terminal is a terminal selected for a FL operation, and
wherein the network function applies the congestion control and performs a notification of a congestion control application related information event.

20. A device comprising at least one memory and at least one processor functionally connected to the at least one memory, wherein the at least one processor controls the device to:
receive a subscription request for a congestion control application related information event for at least one another device,
apply congestion control to the at least one another device, and
perform a notification of a congestion control application related information event based on the applied congestion control,
wherein the at least one another device is devices selected based on a FL operation.

21. A non-transitory computer-readable medium storing at least one instruction, the non-transitory computer-readable recording medium comprising the at least one instruction executable by a processor,
wherein the at least one instruction controls a device to:
receive a subscription request for a congestion control application related information event for at least one another device,
apply congestion control to the at least one another device, and
perform a notification of a congestion control application related information event based on the applied congestion control,
wherein the at least one another device is devices selected based on a FL operation.
